# EUROPEAN PATENT SPECIFICATION

(11) **EP 1 651 879 B1**
(45) Date of publication and mention of the grant of the patent: **18.02.2009**
(21) Application number: 04723917.3
(22) Date of filing: 27.03.2004
(51) Int. Cl.: F16D 27/00, F16D 27/108, H01F 7/18

(54) **STRUCTURE AND METHOD OF MOUNTING BUILT-IN TYPE OF DISCHARGE ELEMENT PART**
STRUKTUR UND VERFAHREN ZUR BEFESTIGUNG EINES ENTLADUNGSELEMENTTEILS
STRUCTURE ET PROCEDE DE MONTAGE DE TYPE INTEGRE DE PARTIE D'ELEMENT DE DECHARGE

(30) Priority: 27.03.2003 KR 2003019044
(43) Date of publication of application: 03.05.2006
(73) Proprietor: Halla Climate Control Corporation, Daejeon-si 306-230 (KR)
(72) Inventor: PARK, Dae-Yong, Yongin-si, Gyeonggi-do 449-908 (KR); KIM, Gi-Hong, Yongin-si, Gyeonggi-do 449-908 (KR); OH, Sung-Taeg, Daedeok-gu, Daejeon 306-230 (KR); PARK, Do-Seo, Daedeok-gu, Daejeon 306-230 (KR); CHUNG, Suk-Jae, Daedeok-gu, Daejeon 306-230 (KR)
(74) Representative: Laufhütte, Dieter
(86) International application number: PCT/KR2004/000704
(87) International publication number: WO 2004/085866

(56) References cited:
- EP-A1- 0 821 176
- DE-A1- 2 039 259
- JP-A- 2000 179 591
- US-A- 4 649 458
- US-A- 5 138 293
- US-A- 5 812 044
- US-A- 5 967 282
- DATABASE WPI Week 200203 Derwent Publications Ltd., London, GB; AN 2002-023489 XP002447560 -& KR 2001 063 074 A (HALLA CLIMATE CONTROL CORP) 9 July 2001 (2001-07-09)

## Description

### Technical Field

The present invention relates to a structure and method of mounting a discharge element part adapted to be connected to a magnetic clutch field coil assembly used in an air conditioner for automobiles, and more particularly, to a structure and method of mounting a built-in type of discharge element part, wherein the discharge element part connected to lead wires is mounted inside a magnetic clutch field coil assembly.

### Background Art

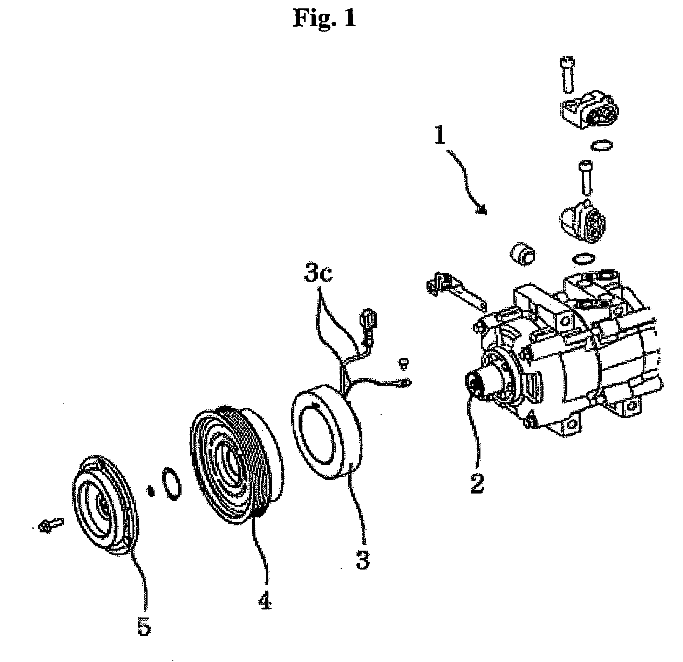

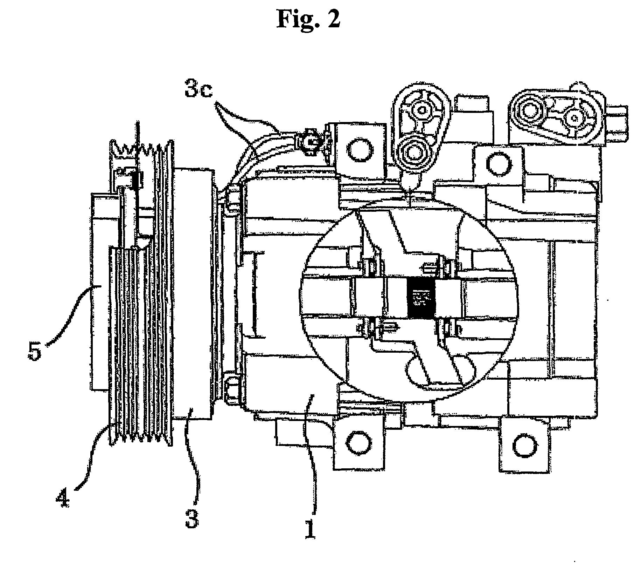

FIGS. 1 and 2 show a conventional compressor that is generally used in an air conditioner for an automobile. As shown, the compressor includes a body 1, a shaft 2 of the body 1, and a magnetic clutch field coil assembly 3, a compressor pulley 4 and a disc 5 are coupled in the order as mentioned above to the shaft 2 of the compressor body 1. The disc 5 is separated by a predetermined distance from the compressor pulley 4, and once if lead wires 3C and 3C' of the magnetic clutch field coil assembly 3 are connected to power source, the disc 5 comes in contact with the compressor pulley 4 by an electromagnetic force generated from the coil inside the magnetic clutch field coil assembly 3 and simultaneously coupled to the compressor shaft 2. The compressor shaft 2 that is coupled to the disc 5 is rotated by the rotation force of the pulley 4, thereby making the refrigerants in the compressor body 1 compressed.

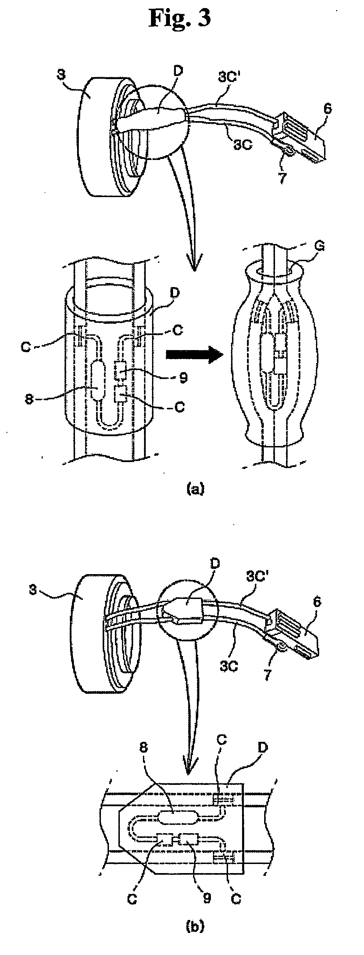

The magnetic clutch field coil assembly 3 is provided with a bobbin on which a coil is wound is accommodated in the interior of a housing thereof, the coil being connected to the compressor body 1 and the power source by means of the lead wires 3C and 3C', at both ends thereof, as shown in FIG 3 (where a reference numeral 6 denotes a power connecting part and 7 denotes a body connecting part).

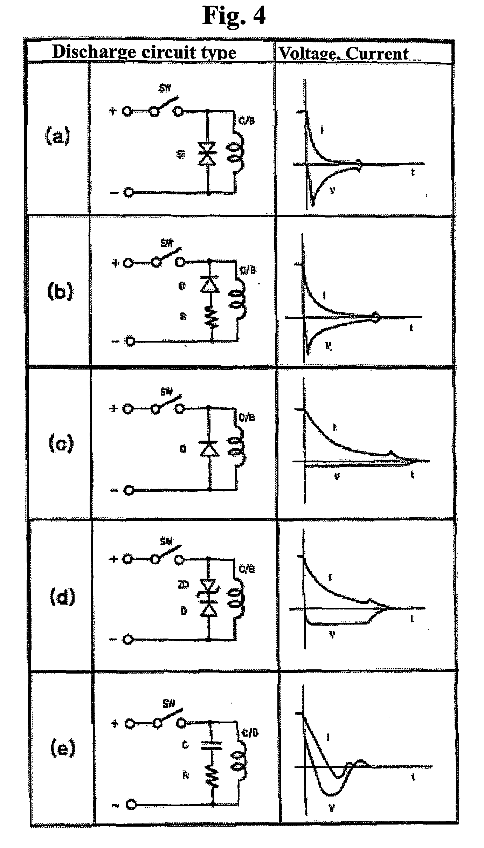

On the other hand, in the case where an excessive reverse electromotive force that is instantly generated when the power is off (that is, the magnetic clutch field coil assembly 3 is turned off) flows via the lead wires 3C and 3C' connected to the magnetic clutch field coil assembly 3 into the electric field parts of the automobile, it may give many damages to the magnetic clutch field coil assembly and the devices disposed in the electric field of the automobile. To prevent the reverse electromotive force from flowing into the electric field of the automobile, there is generally provided a discharge element part D on the lead wires connected to the magnetic clutch field coil assembly. Examples of the discharge element part are such kinds of discharge circuits, as shown in FIG 4.

The discharge circuit can be classified as varistor type, a resistor type, a diode type, a Zener diode type, or a condenser type (which are shown in the types (a) to (e) in FIG 4) in accordance with the kinds of discharge element part. For example, in the case where the discharge element part includes a diode 8 having directionality, the voltage flowing into the electric field of the automobile only flows into the magnetic clutch field coil assembly 3 (that is, the open circuit is changed into the closed circuit) and thus, it does not further flow into the electric field of the automobile. At that time, the formation of a resistor 9 connected to the diode 8 enables the electromagnetic energy by the residual magnetic field generated in the magnetic clutch field coil assembly 3 to be consumed (see FIG 3 and the resistor type (b) of FIG 4).

According to the prior art, by the way, the discharge element part D is connected to the lead wires 3C and 3C' that are extracted outwardly from the magnetic clutch field coil assembly 3 and is generally sealed with a heat shrinkable tube as shown in FIG 3a or a molding material as shown in FIG 3b. Therefore, the discharge element part D is mounted outside the magnetic clutch field coil assembly 3.

However, such the way of mounting the discharge element part D outside the magnetic clutch field coil assembly 3 has the following disadvantages:

First, even though the discharge element part D is coated with the sealing member, the discharge element part (for example, a resistor and a diode) is provided in a space between the magnetic clutch field coil assembly and the compressor such that the discharge element part D (or the discharge circuit) may be damaged by the heat in the interior of the vehicle. More particularly, in the case where the lead wires are vibrated continuously by the vibration of the vehicle itself, there is a dangerous possibility that the connected parts of the lead wires with the diode and the resistor in the discharge element part could be disconnected.

Second, the sealing member for coating the discharge element part D should be separately injection-molded, and to do this, a separate mold is needed, which results in the increase of production costs thereof.

Finally, the presence of the sealing member makes a space for mounting other parts substantially reduced, and even in the case where the lead wires are bent to mount other parts, it is really difficult to do this due to the sealing member coated thereon.

### Disclosure of Invention

Accordingly, the present invention has been made to solve the above-described problems, and it is an object of the present invention to provide a structure and method of mounting a built-in type of discharge element part, wherein the discharge element part is mounted in the interior of a magnetic clutch field coil assembly, thereby giving some advantages that the discharge element part is effectively protected, a production cost becomes substantially low, a sealing efficiency of the discharge element part is improved, and a degree of freedom in the installation of other parts is enhanced.

To accomplish the above object, according to an aspect of the present invention, there is provided a structure of mounting a discharge element part that is adapted to be connected to a magnetic clutch field coil assembly, for cutting off a reverse electromotive force generated from the magnetic clutch field coil assembly if power is off, characterized in that the discharge element part is mounted at one side of a flange of a bobbin opposite to a receiving part of a housing of the magnetic clutch field coil assembly and is inserted into the housing.

According to the present invention, desirably, the discharge element part is connected at both ends to lead wires that are extracted outwardly from the housing and is connected to an intermediate portion of a coil wire, the coil wire being extended along an edge of the flange in such a manner as to be disposed at one side of the flange.

The discharge element part is preferably coated with an insulation material.

The bobbin is a channel type of one that has the flange formed on both sides of an outer peripheral surface thereof, and at that time, the coil wire is preferably mounted at one side of the flange opposite to the receiving part of the housing.

The discharge element part can include a diode, a varistor, a condenser, or a resistor, in accordance with the type and structure of a discharge circuit.

To accomplish the above object, according to another aspect of the present invention, there is provided a method of mounting a discharge element part including the steps of: mounting a coil wire to which the discharge element part is connected at one side of a flange of a bobbin, the bobbin having a coil wound on an outer peripheral surface thereof; connecting both ends of the coil and both ends of the coil wire with ends of lead wires; receiving the bobbin in a housing such that one side of the flange at which the coil wire is mounted is opposite to a receiving part of the housing and at the same time outwardly extracting the lead wires from the housing; and applying an insulation resin into the housing in such a manner as to cover the coil, the coil wire and the bobbin and hardening the insulation resin applied thereto.

### Brief Description of the Drawings

Further objects and advantages of the invention can be more fully understood from the following detailed description taken in conjunction with the accompanying drawings, in which:
FIG 1 is an exploded perspective view of a conventional compressor that is used in an air conditioner for an automobile;
FIG 2 is a side view of the assembled state of the compressor of FIG 1;
FIGS. 3a and 3b are views of the structure of mounting the discharge element part connected to the magnetic clutch field coil assembly and their exploded main parts according to the prior art;
FIG 4 is a table of a variety of discharge circuit types applied to the magnetic clutch field coil assembly;
FIG 5 is an exploded perspective view of a magnetic clutch field coil assembly in which a structure of mounting a discharge element part according to an embodiment of the present invention is made;
FIG 6 is a view of the assembled relation of the discharge element part of this invention with a coil wire and the construction of the discharge element part;
FIG 7 is a perspective view of the assembled state of an embodiment of the magnetic clutch field coil assembly with the discharge element part of this invention, wherein the coil assembly is partially cut;
FIG 8 is a perspective view of the assembled state of another embodiment of the magnetic clutch field coil assembly with the discharge element part of this invention, wherein the coil assembly is partially cut; and
FIG 9 is an exploded perspective view of the magnetic clutch field coil assembly in which a structure of mounting a discharge element part according to another embodiment of the present invention is made.

### Best mode for Carrying Out the Invention

Now, an explanation of the preferred embodiment of the present invention will be in detail given with reference to attached drawings.

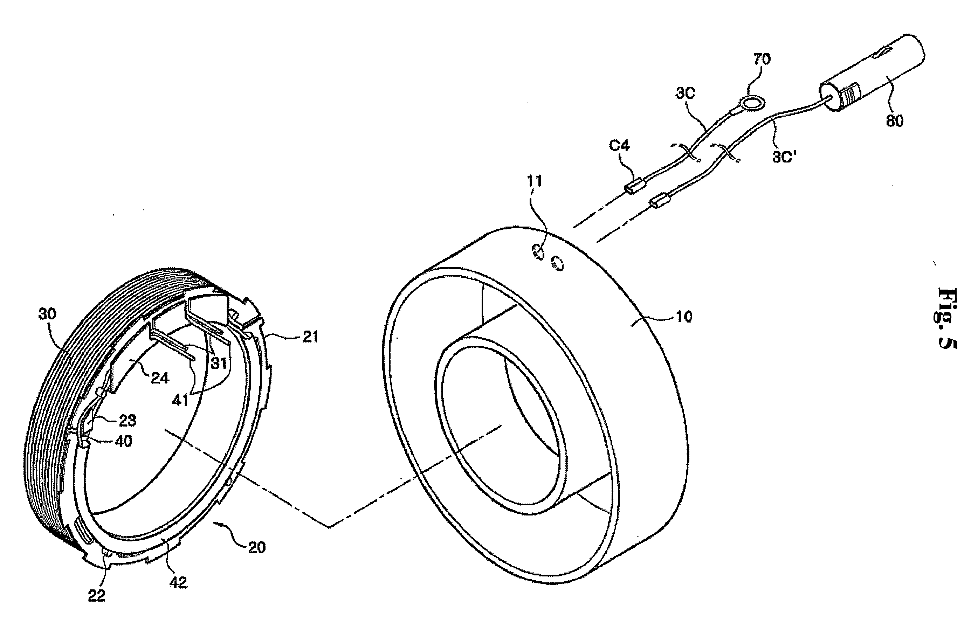

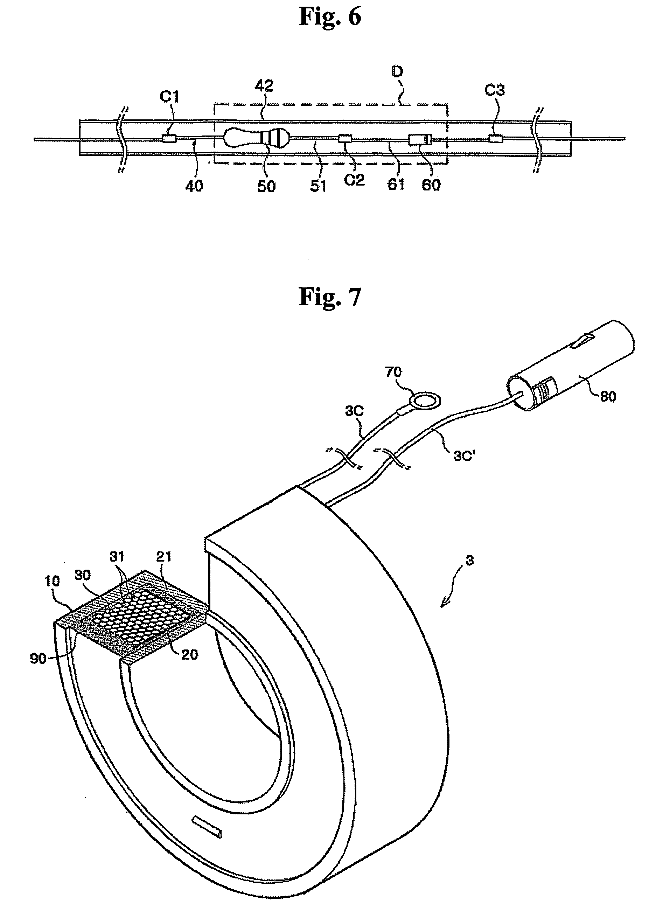

FIG 5 is an exploded perspective view of a magnetic clutch field coil assembly in which a structure of mounting a discharge element part according to an embodiment of the present invention is made, and FIG 6 is a view of the assembled relation of the discharge element part of this invention with a coil wire and the construction of the discharge element part.

A magnetic clutch field coil assembly 3, as shown in FIG 5, includes a housing 10, a bobbin 20 and a coil 30.

The housing 10 is formed of hollow inside and outside cylinders that are concentrically arranged. The inside and outside cylinders are connected to each other at one end thereof such that the one end of the housing 10 is closed along the periphery of the hollow inside cylinder. The housing 10 is provided with holes 11 through which lead wires 3C and 3C' are extracted at a portion where the inside and outside hollow cylinders are connected.

The bobbin 20 is provided at a space between the inside and outside hollow cylinders of the housing 10. The bobbin 20 is made of an insulation material, serving to insulate the inside of the housing space of the housing 10 from the coil 30.

Also, the bobbin 20 is formed of a hollow cylinder that is inserted in the housing 10, and includes a flange 21 at one side of an outer peripheral surface thereof, for supporting the coil 30 wound on the outer peripheral surface. The flange 21 is provided with components mounting a coil wire 40 as will be discussed below, that are formed at one side facing the housing 10.

At one side thereof, the flange 21 includes a plurality of locking guides 22 for locking and supporting the coil wire 40 and insertion guides 23 and 24 for supporting and guiding the coil wire 40 in various ways.

The locking guides 22 are arranged along the edge of the flange 21, and the insertion guide 24 that serves to guide both ends 41 of the coil wire 40 is provided with two insertion concave parts that are formed at positions corresponding with the holes 11 of the housing 10. Also, the insertion guide 24 serves to guide both ends 31 of the coil 30 wound on the bobbin 20.

The coil 30 that is wound on the outer peripheral surface of the bobbin 20 is connected to a power source, for generating an electromagnetic force therefrom. The both ends 31 of the coil 30 are connected to the lead wires 3C and 3C' that are extracted outwardly from the housing 10 and then connected to the power source.

The coil wire 40 with a discharge element part D connected thereto is formed extended along one side edge of the flange 21 at the back face of the flange.

Referring to FIG. 6, the coil wire 40 is provided with a resistor 50 and a diode 60 as the discharge element part that are sequentially connected at an intermediate portion thereof. The resistor 50 and the diode 60 have lead wires 51 and 61 at both ends thereof. The lead wire 51 of the resistor 50 and the coil wire 40 are connected by means of a connecting part C1, the lead wire 51 of the resistor 50 and the lead wire 61 of the diode 60 are connected by means of a connecting part C2, and the lead wire 61 of the diode 60 and the coil wire 40 are connected by means of a connecting part C3.

The coil wire 40 is coated with a coating 42 that is made of an insulation material, serving to protect the coil wire 40. To protect the resistor 50 and the diode 60, especially, an additional insulation coating may be formed on the outer periphery of the discharge element part D, or an injection molding portion and a molding portion may be formed thereon.

The both ends 41 of the coil wire 40 are guided together with the both ends 31 of the coil 30 by means of the insertion guides 23 and 24 on the back face of the flange 21 and are then connected with each other at the connecting part C4. At the same time, the both ends 41 of the coil wire 40 and the both ends 31 of the coil 30 are also connected with the ends of the lead wires 3C and 3C'.

Of course, various modifications may occur without departing from the scope of the invention.

In other words, in addition to the resistor and the diode, for example, a varistor or condenser may be connected at the intermediate portion of the coil wire 40, which is determined upon the type of the discharge circuit. The diode used in the present invention may include a Zener diode.

So as to connect the coil wire 40 at one side of the flange 21 of the bobbin 20, the flange 21 includes another component thereon. For example, there may be provided a channel type protruding part that is extended along the edge at one side of the flange 21 1 and has an insertion groove into which the coil wire 40 is inserted formed in the middle portion thereof.

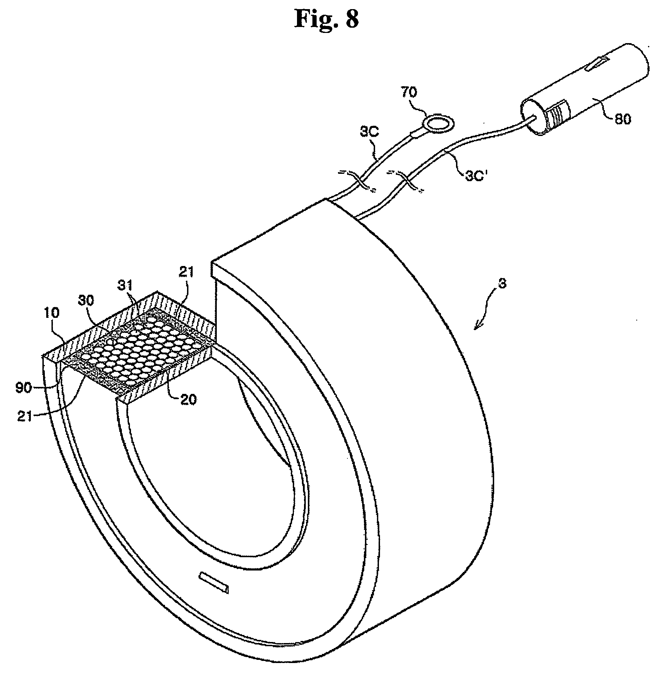

The bobbin 20 may be formed of channel type one that has the flange 21 formed at both sides of the outer peripheral surface thereof (see FIG. 8). In the two flanges 21 of the bobbin 20, in this case, the flange 21 that faces the housing 10 is provided with the locking guides and the insertion guides or the channel type protrusion part for mounting with the coil wire 40 at one side thereof.

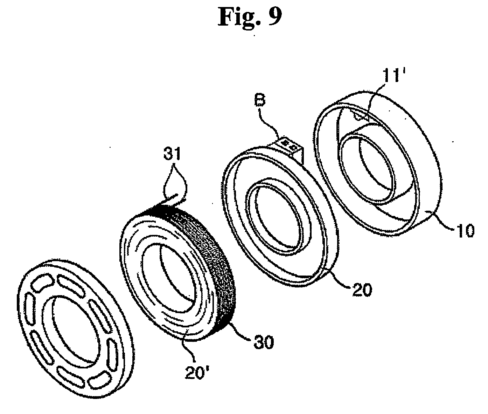

As mentioned above, the bobbin in the present invention has a L-shaped or U-shaped section(channel type), and as shown in FIG 9, it may be separated to surround the upper and lower portions of the coil 30.

As shown in FIG. 9, the bobbin is divided into an upper bobbin 20 and a lower bobbin 20', wherein the upper bobbin 20 is provided with a block body B into which the both ends 31 of a coil 30 and the both ends 41 of a coil wire are inserted. Thus, the housing 10 includes an insertion opening 11' that are formed at a position corresponding to the block body B thereof, for insertion of the block body B.

Next, an explanation on the method of manufacturing the magnetic clutch field coil assembly in which the discharge element part is mounted according to the present invention will be given.

First of all, the coil 30 is wound on the outer peripheral surface of the bobbin 20, and next, the coil wire 40 to which the discharge element part D is connected is mounted at one side of the flange 21 facing the housing by the use of the insertion guides 23 and 24 and the locking guides 22.

Thereafter, the both ends 31 of the coil 30 and the both ends 41 of the coil wire 40 are connected with the ends of the lead wires 3C and 3C' at the connecting part C4.

Next, the bobbin 20 is received in the housing 10 such that the flange 21 of the bobbin 20 is inserted into the space between the inside and outside hollow cylinders of the housing 10 and at the same time, the lead wires 3C and 3C' are extracted outwardly from the housing 10.

Finally, an insulation resin is applied and hardened between the inside and outside hollow cylinders of the housing 10 to cover the coil 30, the coil wire 40 and the bobbin 20.

The insulation resin is selected from ones having excellent insulation and corrosion-resistance properties, for example, like an epoxy resin.

FIG 7 is a perspective view of the assembled state of an embodiment of the magnetic clutch field coil assembly with the discharge element part of this invention, wherein the coil assembly is partially cut, and FIG. 8 is a perspective view of the assembled state of another embodiment of the magnetic clutch field coil assembly with the discharge element part of this invention, wherein the coil assembly is partially cut.

As shown in FIG 7, the coil wire is disposed between the inside bottom surface of the housing 10 and one side of the flange 21 of the bobbin 20, and the insulation resin is filled between the inside and outside hollow cylinders of the housing 10, covering the coil, the bobbin and the coil wire. As discussed above, according to the present invention, the discharge element part connected to the coil wire is fixedly supported and sealed by the use of the insulation coating and the insulation resin in a substantially rigid manner, and then, it is surrounded with the bobbin and the housing, thereby exhibiting a high sealing efficiency.

FIG 8 shows the magnetic clutch field coil assembly to which the channel type bobbin is adopted. The coil wire is mounted at one side of the back flange 21 of the bobbin and is sealed by the insulation resin.

### Industrial applicability

As set forth in the foregoing, there is provided a structure and method of mounting a built-in type of discharge element part, wherein the discharge element part is mounted in the interior of a field coil assembly, thereby giving an advantage that since the discharge element part is effectively protected and supported by the housing and the bobbin, there is a low possibility that the connected parts of the discharge element part with the lead wires are disconnected even though vibrations occurs to the automobile.

In addition, the discharge element part is fixedly supported and sealed in the housing by means of the insulation resin, without having an additional sealing member, such that a sealing efficiency of the discharge element part is improved and also production costs are reduced.

According to the prior art, the coatings of the lead wires are removed to connect the discharge element part with the magnetic clutch field coil assembly and after connecting, the lead wires are molded or coated with a sealing member, which makes the connecting process of the discharge element part substantially complicated. However, according to the present invention, the discharge element part is directly connected to the coil wire having both ends connected to the lead wires such that it is connected with the lead wires, which allows the whole number of assembling processes to be greatly decreased, thereby making it possible to achieve the production in large quantities.

Additionally, the discharge element part is mounted in the housing of the magnetic clutch field coil assembly such that the structure of connecting the compressor with the magnetic clutch field coil assembly is made in a compact manner and other parts could be disposed in a space between the compressor and the magnetic clutch field coil assembly, hence improving a degree of freedom in the installation of them.

While the present invention has been described with reference to a few specific embodiments, the description is illustrative of the invention and is not to be construed as limiting the invention. Various modifications may occur to those skilled in the art without departing from the scope of the invention as defined by the appended claims.

## Claims

1. A structure of mounting a built-in type of discharge element part (D) that is adapted to be connected to a magnetic clutch field coil assembly (3), for cutting off a reverse electromotive force generated from the magnetic clutch field coil assembly (3) if power is off, **characterised in that** the discharge element part (D) is mounted at one side of a flange (21) of a bobbin (20) opposite to a receiving part of a housing (10) of the magnetic clutch field coil assembly (3) and is inserted into the housing (10).

2. The structure according to claim 1, wherein the discharge element part (D) is connected at both ends (41) to lead wires (3C and 3C') that are extracted outwardly from the housing (10) and is connected to an intermediate portion of a coil wire (40), the coil wire (40) being extended along an edge of the flange (21) in such a manner as to be disposed at one side of the flange (21).

3. The structure according to claim 1, wherein the discharge element part (D) is coated with an insulation material.

4. The structure according to claim 1, wherein the bobbin (20) is a channel type of one that has the flange (21) formed on both sides of an outer peripheral surface thereof, and the coil wire (40) is mounted at one side of the flange (21) opposite to the receiving part of the housing (10).

5. The structure according to any one of claims 1 to 4, wherein the discharge element part (D) includes a diode.

6. The structure according to any one of claims 1 to 4, wherein the discharge element part (D) includes a varistor.

7. The structure according to any one of claims 1 to 4, wherein the discharge element part (D) includes a condenser.

8. The structure according to any one of claims 1 to 4, wherein the discharge element part (D) includes a Zener diode.

9. The method of mounting a discharge element part (D) comprising the steps of:
mounting a coil wire (40) to which the discharge element part (D) is connected at one side of a flange (21) of a bobbin (20), the bobbin (20) having a coil (30) wound on an outer peripheral surface thereof;
connecting both ends (31) of the coil (30) and both ends (41) of the coil wire (40) with ends of lead wires (3C and 3C');
inserting the bobbin (20) in a housing (10) such that one side of the flange (21) at which the coil wire (40) is mounted is opposite to a receiving part of the housing (10) and at the same time outwardly extracting the lead wires (3C and 3C') from the housing (10); and
applying an insulation resin into the housing (10) in such a manner as to cover the coil (30), the coil wire (40) and the bobbin (20) and hardening the insulation resin applied thereto.

## Patentansprüche

1. Eine Struktur der Montage eines Einbau-Entladungselementteils (D), der zur Verbindung mit einer magnetischen Kupplungserregerspulenanordnung (3) ausgelegt ist, zum Abstellen einer elektromotorischen Umkehrkraft, die aus der Kupplungserregerspulenanordnung (3) erzeugt wird, wenn der Strom ausgeschaltet ist, **dadurch gekennzeichnet, dass** der Entladungselementteil (D) an einer Seite eines Flansches (21) einer Spule (20) gegenüber von einem aufnehmenden Teil eines Gehäuses (10) der magnetischen Kupplungserregerspulenanordnung (3) montiert ist und in das Gehäuse (10) eingeführt ist.

2. Die Struktur nach Anspruch 1, wobei der Entladungselementteil (D) an beiden Enden (41) mit Zuleitungen (3C und 3C') verbunden ist, die aus dem Gehäuse (10) nach außen extrahiert sind, und an einen Zwischenteil eines Wicklungsdrahtes (40) angeschlossen ist, wobei der Wicklungsdraht (40) entlang eines Rands des Flansches (21) so geführt ist, dass er an einer Seite des Flansches (21) angeordnet ist.

3. Die Struktur nach Anspruch 1, wobei der Entladungselementteil (D) mit einem Isoliermaterial beschichtet ist.

4. Die Struktur nach Anspruch 1, wobei die Spule (20) ein Typ von Durchgang ist, der einen Flansch (21) aufweist, der an beiden Seiten einer äußeren Umfangsfläche davon ausgebildet ist, und der Wicklungsdraht (40) an einer Seite des Flansches (21) gegenüber von einem aufnehmenden Teil des Gehäuses (10) montiert ist.

5. Die Struktur nach einem der Ansprüche 1 bis 4, wobei der Entladungselementteil (D) eine Diode beinhaltet.

6. Die Struktur nach einem der Ansprüche 1 bis 4, wobei der Entladungselementteil (D) einen Varistor beinhaltet.

7. Die Struktur nach einem der Ansprüche 1 bis 4, wobei der Entladungselementteil (D) einen Kondensator beinhaltet.

8. Die Struktur nach einem der Ansprüche 1 bis 4, wobei der Entladungselementteil (D) eine Zener-Diode beinhaltet.

9. Das Verfahren zum Montieren eines Entladungselementteils (D), das die folgenden Schritte umfasst:
Montieren eines Wicklungsdrahtes (40), mit dem der Entladungselementteil (D) an einer Seite eines Flansches (21) einer Spule (20) verbunden ist, wobei die Spule (20) eine Wicklung (30) aufweist, die auf eine äußere Umfangsfläche davon aufgewickelt ist;
Verbinden von beiden Enden (31) der Wicklung (30) und beiden Enden (41) des Wicklungsdrahtes (40) mit Enden von Führungsdrähten (3C und 3C');
Einführen der Spule (20) in ein Gehäuse (10), derart, dass eine Seite des Flansches (21), an der der Wicklungsdraht (40) montiert ist, sich gegenüber von einem aufnehmenden Teil des Gehäuses (10) befindet und gleichzeitig die Zuleitungen (3C und 3C') aus dem Gehäuse (10) nach außen extrahiert sind; und
Aufbringen eines Isolierharzes in dem Gehäuse (10) auf eine solche Weise, dass die Wicklung (30), der Wicklungsdraht (40) und die Spule (20) bedeckt sind, und Härten des darauf aufgebrachten Isolierharzes.

## Revendications

1. Une structure de montage d'un type de partie d'élément de décharge (D) incorporé qui est adaptée pour être connecté à un assemblage de bobine de champ d'un embrayage magnétique (3), pour couper une force électromotrice inverse générée par l'assemblage de bobine de champ d'un embrayage magnétique (3) si le courant est éteint, **caractérisé en ce que** la partie d'élément de décharge (D) est montée sur un côté de la flasque de vilebrequin (21) d'une bobine (20) à l'opposé d'une partie réceptrice d'un logement (10) de l'assemblage de bobine de champ d'un embrayage magnétique (3) et est insérée dans le logement (10).

2. La structure selon la revendication 1, dans laquelle la partie d'élément de décharge (D) est connectée aux deux extrémités (41) aux fils de sortie (3C et 3C') qui sont extraits à l'extérieur du logement (10) et est connectée à une portion intermédiaire d'une bobine de fil (40), la bobine de fil (40) étant étendue le long du bord de la flasque de vilebrequin (21) de manière à être disposée d'un côté de la flasque de vilebrequin (21).

3. La structure selon la revendication 1, dans laquelle la partie d'élément de décharge (D) est enduite d'un matériel d'isolation.

4. La structure selon la revendication 1, dans laquelle la bobine (20) est un type de chaîne qui a la flasque de vilebrequin (21) formée aux deux extrémités d'une surface périphérique extérieure, et la bobine de fil (40) est montée d'un côté de la flasque de vilebrequin (21) à l'opposé de la partie réceptrice du logement (10).

5. La structure selon l'une quelconque des revendications de 1 à 4, dans laquelle la partie d'élément de décharge (D) inclut une diode.

6. La structure selon l'une quelconque des revendications 1 à 4, dans laquelle la partie d'élément de décharge (D) inclut une varistance.

7. La structure selon l'une quelconque des revendications de 1 à 4, dans laquelle la partie d'élément de décharge (D) inclut un condensateur.

8. La structure selon l'une quelconque des revendications 1 à 4, dans laquelle la partie d'élément de décharge (D) inclut une diode Zener.

9. La méthode de montage d'une partie d'élément de décharge (D) comprenant les étapes de :
montage d'une bobine de fil (40) à laquelle la partie d'élément de décharge (D) est connectée d'un côté de la flasque de vilebrequin (21) d'une bobine (20), la bobine (20) ayant un rouleau (30) sur la surface périphérique ;
connection des deux extrémités (31) du rouleau (30) et des deux extrémités (41) de la bobine de fil (40) avec des extrémités de fils de sortie (3C et 3C') ;
insertion de la bobine (20) dans un logement (10) de manière à ce qu'un côté de la flasque de vilebrequin (21) sur lequel la bobine de fil (40) est montée soit à l'opposé d'une partie réceptrice du logement (10) et en même temps extraction à l'extérieur des fils de sortie (3C et 3C') du logement (10) ; et
application d'une résine d'isolation dans le logement (10) de manière à couvrir le rouleau (30), la bobine de fil (40) et la bobine (20) et durcissement de la résine d'isolation qui y est appliquée.
